Europäisches Patentamt

European Patent Office

Office européen des brevets

(19)

(11) EP 0 601 764 B1

(12) EUROPEAN PATENT SPECIFICATION

(45) Date of publication and mention
of the grant of the patent:
**20.08.1997 Bulletin 1997/34**

(51) Int Cl.6: **C08G 18/10**

(21) Application number: **93309535.8**

(22) Date of filing: **30.11.1993**

(54) **Polyurethane emulsion compositions having active amino groups**

Polyurethanemulsionszusammensetzungen, die aktive Aminogruppen enthalten

Compositions de polyuréthanne sous forme d'émulsion contenant des groupes amino

(84) Designated Contracting States:
**DE FR GB**

(30) Priority: **01.12.1992 JP 321668/92**

(43) Date of publication of application:
**15.06.1994 Bulletin 1994/24**

(73) Proprietor: **DAI-ICHI KOGYO SEIYAKU CO., LTD.
Shimogyo-ku Kyoto 600 (JP)**

(72) Inventors:
• **Sato, Kazuo
Ohtsu-shi, Shiga 520 (JP)**
• **Sugimoto, Tadayuki
Kyoto 606 (JP)**
• **Saiuchi, Naofumi
Yashu-gun, Shiga 520-23 (JP)**

(74) Representative: **West, Alan Harry et al
R.G.C. Jenkins & Co.
26 Caxton Street
London SW1H 0RJ (GB)**

(56) References cited:
**EP-A- 0 407 968        EP-A- 0 552 420
DE-B- 2 536 678        US-A- 3 903 031
US-A- 4 012 349**

• **DATABASE WPI Week 7529, Derwent
Publications Ltd., London, GB; AN 75-48215 &
JP-A-49 099 194 (DAINIPPON INK. CHEM.)**
• **DATABASE WPI Week 7529, Derwent
Publications Ltd., London, GB; AN 75-48215 &
JP-A-49 099 194**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to emulsion compositions of polyurethanes having active amino groups which readily react with a variety of reactive groups.

Polyurethane resins have found extensive use as adhesives, coating materials and modifiers. In recent years, synthetic resins in the form of water-soluble or water-based emulsions have attracted increasing interest since resins prepared in a solvent system release the solvent into the atmosphere to cause environmental contamination. In the field of polyurethane resins, therefore, water-soluble and water-based emulsions are increasingly used for adhesives and coatings in place of the conventional solvent-based systems and further applications are constantly being considered. In short, the application of water-based polyurethane resins is expanding and will continue to expand in the future.

There are many known water-soluble and water-based polyurethane resin emulsions. One is an emulsion of a thermoreactive polyurethane of relatively low to medium molecular weight using blocked isocyanate groups. Another is an emulsion of a polyurethane of relatively high molecular weight, mainly comprising straight-chain molecular structures. Such polyurethane emulsions are prepared by introducing anionic, cationic or nonionic hydrophilic groups into the urethane skeleton to give the urethane resin a self-emulsifying and dispersing property, and then dispersing the resin in water, or by adding an emulsifier to a hydrophobic urethane resin to forcefully disperse the resin in water.

The above polyurethane emulsions, however, suffer from the following problems:

The thermal reaction type of polyurethane emulsions using blocked isocyanate groups form a network structure through thermal reaction. The resulting films have excellent solvent resistance and excellent adhesion to an adherent, such as heat-resistant adhesion. These emulsions, however, are of thermal reaction type and require a heating step. Processing conditions and applications may then be limited by the need for a heating facility or by the heat resistance of the adherent itself. Their applications are also limited by the growing tendency towards energy conservation.

On the other hand, polyurethane emulsions mainly comprising straight-chain structures form polyurethane film layers upon mere drying. Hence their applications are not limited in the same way as the above thermoreactive type polyurethane emulsions, indeed, they have a wide range of applications. These polyurethane emulsions, however, basically have straight-chain structures and exhibit a thermoplastic property, and their performances in, for example, heat-stable adhesion, solvent resistance, hot water resistance and chemical resistance are inferior.

To improve upon such disadvantages, attempts have been made to add a variety of crosslinking agents, for instance, melamines such as trimethylol melamine, epoxys, and blocked isocyanates. As a result, some small improvements have been made, but overall performance remains generally unsatisfactory. Processing characteristics are also unsatisfactory; for example, the processing temperature must be higher than the cleavage temperature of the reactive group of the crosslinking agent. Such deficiencies in performance are mainly due to the fact that modification of the emulsions is limited to improvements in physical properties through entanglement like an interpenetrating polymer network (IPN) between the polyurethane resin and the self-polymerization product of the crosslinking agent since no functional group for reaction with the crosslinking agent is introduced into the polyurethane emulsion.

Other proposals which have been made in this context are as follows:

US-A-4 012 349 describes a process for preparing non-ionic polyurethane emulsions comprising chain-extending an isocyanate-terminated urethane prepolymer formed by reaction of a polyhydroxyl reactant having a molecular weight of 200 to 10,000 and a stoichiometric excess of a polyisocyanate with a polyalkylene polyamine mixing the resulting polyamine with water or reacting with a cyclic dicarboxylic anhydride and then with water, a water-soluble polyoxyethylene glycol comprising 15 to 80% by weight of the polyhydroxyl reactant, and the polyalkylene polyamine chain-extending compound having at least two primary or secondary amino groups and a functional group of the formula -CH(OH)-CH$_2$X in which X is Cl or Br.

JP-A-49 099 194 describes the preparation of polyurethane aqueous dispersions giving coating films with good mechanical properties by reaction of an isocyanate group-containing prepolymer with an amino compound containing two primary amino groups and one or more secondary amino groups and with a compound containing two or more epoxy groups.

EP-A-0 407 968 describes a semi-continuous process for the preparation of polyurethane ionomer or polyurethane-urea ionomer aqueous dispersions which comprises forming an isocyanate-terminated ionic prepolymer by contacting an aliphatic or cycloaliphatic diisocyanate or a mixture thereof with an aromatic diisocyanate, an organic polyol, and a difunctional isocyanate-reactive component containing an ionic group, neutralising the ionic groups, adding water to form an aqueous emulsion and adding a hydrocarbon polyamine extender.

EP-A-0 552 420 describes a process in which polyurethane-urea polymers in aqueous dispersion are obtained by chain extending an NCO-containing prepolymer in aqueous medium. The NCO-containing prepolymer is prepared by reacting a polyisocyanate with an active hydrogen-containing compound such as a polyol and an extended aliphatic diamine monomer, the reaction product of which is then dispersed in water and chain extended.

US-A-3 903 031 describes a process for the preparation of cationic polyurethane emulsions comprising chain-extending a urethane prepolymer having terminal isocyanate groups with a polyalkylene polyamine having at last two primary or secondary amino groups and a functional group of the formula

$$-CH_2-CH(OH)-CH_2X$$

in which X is Cl or Br, to form a polyurethane-urea-polyamine, and mixing that product with an aqueous acid to form a polyurethane emulsion.

It is desired to develop emulsions of polyurethanes into which functional groups effective for reaction with the above crosslinking agents has been introduced. The present invention is intended to provide such polyurethane emulsion compositions.

The compositions produced according to the present invention are emulsions of polyurethanes having active amino groups and are obtained by the process described below.

In accordance with the invention there is provided a process for preparing polyurethane emulsion comprising

emulsifying and dispersing in water a urethane prepolymer having 0.3 to 3% by weight terminal isocyanate groups, the prepolymer having been obtained by reacting a compound having two or more active hydrogen atoms and an organic polyisocyanate selected from alicyclic polyisocyanates, polyisocyanates having tertiary isocyanate groups and mixtures thereof, and

reacting the urethane prepolymer at a temperature of 5 to 40°C with a polyamine having at least two primary amino groups and at least one secondary amino group such that the molar ratio of terminal isocyanate groups in the urethane prepolymer to primary amino groups in the polyamine is from 1/1 to 1/0.7.

The polyurethane emulsion compositions obtained by this method have a polyurethane skeleton into which the secondary amino group has been introduced as an active amino group (the primary amino group having also been introduced into the polyurethane skeleton in some cases). This enables crosslinking at low temperature when an epoxy crosslinking agent is used. As a result, the physical properties of the polyurethane emulsion compositions are significantly improved. Moreover, the resulting compositions enjoy advantageous processing conditions since their properties can be modified by crosslinking at low temperatures.

In the following description, emulsion compositions having active amino groups according to the invention will be explained in more detail.

First, the urethane prepolymer having terminal isocyanate groups which is used in the production of the emulsion compositions according to the invention, is obtained by allowing a compound having two or more active hydrogen atoms to react with an excess of organic polyisocyanate in the presence or absence of a solvent.

The compound having two or more active hydrogens may be one having, in its molecule or at its terminals, two or more hydroxyl, carboxyl, amino or mercapto groups. Such compounds include the well-known polyethers, polyesters, polyether esters, polythioethers, polyacetals, polybutadienes and polysiloxanes. In particular, polyethers and polyesters both having two or more terminal hydroxyl groups are preferred. A preferred range of molecular weights for these compounds having two or more active hydrogens is from 50 to 5,000.

If necessary, a chain-lengthening agent may be mixed with the compound having two or more active hydrogen atoms. Specific examples of such chain-lengthening agents include 1,4-butanediol, 1,6-hexanediol, 3-methyl-1,5-pentanediol, ethylene glycol, butanediol, neopentyl glycol, diethylene glycol, trimethylol propane and cyclohexanedimethanol.

In consideration of the reaction between the urethane prepolymer and the polyamine compound after the prepolymer has been emulsified and dispersed in water, of maintenance of the emulsified and dispersed state, and of storage stability, it is particularly important to select the organic polyisocyanate from alicyclic polyisocyanates including dicyclohexylmethane diisocyanate, isophorone diisocyanate and hydrogenated xylylene diisocyanate and from organic polyisocyanates having tertiary isocyanate groups such as tetramethylxylylene diisocyanate.

The reaction between the compound having two or more active hydrogen atoms and an excess of the organic polyisocyanate is effected by the well-known one-stage or multi-stage isocyanate polyaddition method at temperatures ranging from 50 to 120°C.

In the above method, when necessary, a reaction control agent such as phosphoric acid, adipic acid or benzoyl chloride, or a reaction catalyst such as dibutyltin dilaurate, stannous octanoate or triethylamine may be added to the system. Furthermore, an organic solvent which does not react with isocyanate group may be added during the reaction or after completion of the reaction.

Such an organic solvent may be acetone, methyl ethyl ketone, tetrahydrofuran, dioxane, ethyl acetate, toluene or xylene. In view of the facts that the polyurethane emulsion compositions according to the invention are water-based emulsions, and that the solvent must be recovered, it is desirable to use acetone, methyl ethyl ketone or ethyl acetate as the solvent. When the emulsification and dispersion of the urethane prepolymer in water, is also taken into consideration, it is more desirable to use acetone or methyl ethyl ketone. Moreover, when the control of the reaction between the emulsified and dispersed urethane prepolymer and the polyamine is taken into consideration, it is more desirable to use ethyl acetate. Selection of such a solvent may be made on a case-by-case basis.

In the above polyaddition method, if necessary, a stabilizer such as an antioxidant or an ultra-violet absorbent may be added to the system during the reaction or after completion of the reaction.

The content of terminal isocyanate groups in the urethane polymer obtained is from 3.0 to 0.3 % by weight, particularly from 2.0 to 1.0 % by weight. If the content of terminal isocyanate groups is greater than 3.0 % by weight, the emulsified state will be lost at the time of the reaction with polyamine and gelation will occur, or the product stability and temporal stability will be inadequate. If the content of terminal isocyanate groups is less than 0.3 % by weight, the quantity of active amino groups to be introduced by the reaction with polyamine will be small. Hence the desired effect of crosslinking modification with the above melamine, epoxy or blocked isocyanate crosslinking agent will not be exhibited.

The urethane prepolymer obtained as described above is dispersed in water and emulsified. Any one of the following three methods may be used prior to dispersion in water:

(1) At the stage of preparing the above urethane prepolymer, carboxyl groups are introduced, in advance, into the molecule through reaction between a polyol component having carboxyl groups such as dimethylol propionate and an organic polyisocyanate. Then the carboxyl group is neutralized with a basic compound such as triethylamine, trimethylamine, diethanol monoethylamine, dimethyl ethanolamine, caustic soda or caustic potash to convert it into a carboxylate salt.

(2) At the stage of preparing the above urethane prepolymer, an oxyethylene chain is included in advance in the molecule in an amount of 5 to 20 % by weight. Then a nonionic surfactant having a hydrophilic-lipophilic balance value from 6 to 18 is added to and mixed with the urethane prepolymer at 50°C or less after the prepolymer has been prepared. (In consideration of the emulsification and dispersion properties of the product and the water resistance of the product film, the quantity of surfactant is preferably from 2 to 15 % by weight relative to the urethane prepolymer.)

(3) After the preparation of the above urethane prepolymer, the prepolymer is made to react with a water solution of the sodium salt or potassium salt of for example aminoethanesulfonic acid or aminoacetic acid, corresponding to 50 to 5 % of terminal isocyanate group, and preferably to 30 to 5 % thereof, at a temperature from 5 to 50°C, preferably from 20 to 40°C for 60 minutes.

After any one of the above procedures (1), (2) and (3) is completed, water is added to the urethane prepolymer and an emulsifying and dispersing apparatus such as homomixer or homogenizer is used to effect emulsification. During that process, it is desirable to keep the emulsification and dispersion temperature low, from 5 to 40°C, preferably from 5 to 30°C, and more preferably from 5 to 20°C so as to suppress the reaction between the terminal isocyanate groups of the urethane prepolymer and water.

As described above, the emulsion compositions of polyurethanes having active amino groups are obtained by emulsifying the urethane prepolymer in water, and allowing the terminal isocyanate groups of the urethane prepolymer and the polyamine to react with each other in the emulsified and dispersed system in a polyamine chain lengthening reaction.

The polyamine to be added as described above may be a polyamine having, in the same molecule, at least two primary amino groups and at least one secondary amino group, for instance, diethylenetriamine and triethylenetetramine. The quantity of polyamine is determined so that the molar ratio of the terminal isocyanate groups of the urethane prepolymer to the primary amino groups of the polyamine is from 1/1 to 1/0.7. If the mole ratio is smaller than 1/1 then an effective increase in molecular weight will tend to be inhibited. If the mole ratio is greater than 1.0/0.7, then the quantity of the active amino groups introduced will be decreased. When the resulting emulsion compositions are used with a variety of crosslinking agents, the exhibition of improved physical properties due to crosslinking will be small. If the mole ratio is greater than 1.0/0.7, increased viscosity and gelation of the emulsion composition will occur.

In the polyamine chain-lengthening reaction in the emulsified and dispersed system, an emulsifying and dispersing apparatus such as homomixer or homogenizer is used to make sure the reaction proceeds homogeneously. To avoid gelation which may be caused by breakdown of emulsification due to too rapid reaction or localized reaction, and in view of product stability and reactant stability, the reaction is carried out at temperatures from 5 to 40°C, preferably from 5 to 30°C, and more preferably from 5 to 20°C. The polyamine chain-lengthening reaction normally takes from 10 to 60 minutes.

In the polyamine chain-lengthening reaction, the primary amino groups in the polyamine have a greater velocity of reaction than the isocyanate group and selectively participate in the chain-lengthening reaction. As a result, the position of the secondary amino group in the polyamine molecule is introduced into the polyurethane skeleton structure. To promote the reaction between the isocyanate groups of the urethane prepolymer and the polyamine, and to suppress the side reaction between water and the isocyanate groups, phosphoric acid, hydrochloric acid or benzoyl chloride may be added.

If an organic solvent is included in the emulsified and dispersed system finally obtained, then the organic solvent may be distilled away under reduced pressure at temperature from 30 to 70°C to obtain the polyurethane emulsion composition according to the invention.

Regarding the method of producing the emulsion compositions according to the invention, the organic polyisocyanate to be used in the stage of preparing the urethane prepolymer is, as mentioned above, an alicyclic polyisocyanate or an organic polyisocyanate having tertiary isocyanate groups. This is advantageous for the subsequent emulsification and dispersion of the urethane prepolymer in water, the suppression of side reactions between the isocyanate groups of the prepolymer and water, the reaction with polyamine in the emulsified and dispersed system, and the subsequent maintenance and storage stability of the emulsified and dispersed system.

In the method of producing the emulsion compositions according to the invention, the polyamine having at least two primary amino groups and at least one secondary amino group is added to the urethane prepolymer after emulsification and dispersion. Then the primary amino groups of the polyamine selectively participate in a chain-lengthening reaction with the isocyanate group of the prepolymer. As a result, there is obtained an emulsion composition of the polyurethane having active amino groups, in which the secondary amino groups have been introduced into the polyurethane skeleton.

The polyurethane emulsion compositions according to the invention have, like conventional polyurethane emulsions, high molecular weights. Hence they form polyurethane films when merely dried and exhibit excellent physical properties including good water resistance, solvent resistance and chemical resistance.

The polyurethane emulsion compositions of the invention have active amino groups introduced into the polyurethane skeleton. When they are used with a melamine, epoxy or blocked-isocyanate cross-linking agent, the active amino groups will readily undergo cross-linking with the cross-linking agent. In particular, when an epoxy cross-linking agent is used, the active amino group and the epoxy group of the cross-linking agent will cross-link when the system is dried in air. The cross-linking reaction between the active amino group and the cross-linking agent results in a polyurethane emulsion composition having physical properties which are improved over those of conventional polyurethane emulsions.

The polyurethane emulsion compositions of the invention have the following significant benefits. Since the polyurethane emulsion compositions have active amino groups in the polyurethane skeleton, the compositions will undergo crosslinking reaction with known cross-linking agents such as epoxy cross-linking agents upon being dried at room temperature. The resulting polyurethane will exhibit significantly improved physical properties including strength, hot water resistance and solvent resistance relative to those of the conventional polyurethane emulsions.

Moreover, since the polyurethane emulsion compositions readily cross-link, significant improvements in physical properties are exhibited even when the processing temperature is low and/or when the processing speed is high and the processing time is short. Furthermore, since the compositions can be processed at low temperatures, they may be applied to adherents of low heat resistance. In short, the polyurethane emulsion compositions have wide ranges of processing conditions and adherents and are extremely beneficial.

The polyurethane emulsion compositions of the invention may be used in a wide range of applications such as impregnation and coating of fibers, knit fabrics, woven fabrics, nonwoven fabrics, wood, paper, leather, metal and plastics, and as adhesive and vehicle for paint and ink.

Since the polyurethane emulsion compositions of the invention are highly compatible, because of their ionic nature, with other water-based resin emulsions such as resin emulsions of vinyl acetate, ethylenevinylacetate copolymer and acrylic ester, and with rubber latexes of natural rubber, SBR and NBR, the compositions may be used as a modifier for the above resin emulsions and rubber latexes.

The following Examples illustrate the invention. In the Examples, "part" and "%" part by weight and % by weight except where indicated otherwise.

<u>Example 1</u>

350 parts of polyester polyol (butylene adipate; molecular weight: 2,000), 10.1 parts of trimethylol propane, 35 parts of polyethylene glycol (molecular weight: 600), 35 parts of PO(propyleneoxide)/EO(ethyleneoxide) random copolymer polyether polyol (PO/EO = 30/70; molecular weight: 3,400), and 78.3 parts of 1,4-butanediol were added to and dissolved in 400 parts of methyl ethyl ketone. Then 310 parts of isophorone diisocyanate were added at a temperature of 50°C. Then 0.05 part of dibutyltin dilaurate was added and the system was gradually heated to 75°C. The system was then allowed to react at 75°C for 60 minutes. Then 0.05 part of dibutyltin dilaurate was added, the reaction was allowed to continue at 75°C for 200 minutes and then the system was cooled to 50°C. The free isocyanate content of the urethane prepolymer after cooling to 50°C was 2.0 % (relative to the solids content). Next, at 45°C, 80 parts of poly(oxyethylene) arylphenol ether type nonionic surfactant (HLB = 15), which is an ethylene oxide adduct of distyrene phenol, was added and mixed for 10 minutes. Then, the system was stirred at 3,000 r.p.m. with a homomixer. 1,300 parts of distilled water was then added gradually. After that, the system was emulsified at a temperature of 30°C for 20 minutes.

The temperature was lowered to 20°C, and a water solution of diethylenetriamine was added to the system. The solution was prepared by dissolving 18 parts of diethylenetriamine in 130 parts of distilled water. Then the temperature was controlled in a range of 20 to 25°C, and the system was stirred at 3,000 r.p.m. with the homomixer for 60 minutes. Next, the methyl ethyl ketone solvent was recovered at reduced pressure (water bath temperature: 40°C) by means of an evaporator. An emulsion of polyurethane having active amino groups according to the invention was obtained.

The polyurethane emulsion thus obtained was analyzed; the results are shown in Table 1. The quantity of active amino groups was determined by titration with hydrochloric acid; 10 parts of the emulsion was stirred and dissolved in 300 parts of N-methyl-2-pyrrolidone, and brom phenol blue was used as the indicator. The number of mgs KOH having the same number of moles as the carboxyl group required to neutralize 1 g of the specimen was expressed as Am.V (amine value) (unit: KOH mg/g).

Table 1

| Example 1 | |
| --- | --- |
| Solids content | 40 % by weight |
| Am.V | 3.80 |
| Appearance | White liquid |

Example 2

350 parts of polyether polyol (PO/EO copolymer, PO/EO = 90/10; molecular weight: 2,000), 15 parts of trimethylol propane, 30 parts of polyethylene glycol, 40 parts of PO/EO random copolymer polyether polyol (PO/EO = 30/70; molecular weight: 3,600), and 150 parts of cyclohexane dimethanol was dissolved in 400 parts of methyl ethyl ketone. Next, 360 parts of isophorone diisocyanate was added. Then 0.1 part of dibutyltin dilaurate was added at 50°C, and the system was gradually heated to 75°C. The system was allowed to react at 75°C for 300 minutes. The system was then cooled to 50°C. The free isocyanate content of the urethane prepolymer was 1.80 % (relative to the solids content).

Next, at a temperature of 40°C, 90 parts of the same poly(oxyethylene) arylphenol ether type nonionic surfactant (HLB = 15) as that used in Example 1 was added to the system, and was mixed for 15 minutes. Then, the system was stirred at 3,000 r.p.m. with a homomixer, and 1,690 parts of distilled water was added gradually. After that, the system was emulsified at 25°C for 20 minutes.

Next, a water solution of diethylenetriamine, which was prepared by dissolving 18.7 parts of diethylenetriamine in 100 parts of distilled water, was added to the system at 25°C. While the temperature was controlled at 20 to 25°C, the system was stirred at 3,000 r.p.m. with the homomixer for 60 minutes. Next, methyl ethyl ketone solvent was recovered at reduced pressure (water bath temperature: 40°C) by means of an evaporator. As a result, an emulsion composition of polyurethane having active amino groups according to the invention was obtained.

The polyurethane emulsion thus obtained was analyzed; the results are shown in Table 2. The quantity of the active amino groups was determined by a method similar to that of Example 1.

Table 2

| Example 2 | |
| --- | --- |
| Solids content | 38 % by weight |
| Am.V | 3.30 |
| Appearance | White liquid |

Example 3

7.0 parts of trimethylol propane and 57.0 parts of 1,4-butanediol were added to 255 parts of polycarbonate polyol (polycarbonate of 1,6-hexane; molecular weight: 2,000). Then 290 parts of methyl ethyl ketone were added. Next, 260 parts of isophorone diisocyanate and 0.01 part of dibutyltin dilaurate were added at 50°C, and the system was gradually heated to raise the temperature to 75°C. The system was allowed to react at 75°C for 180 minutes. As a result, urethane prepolymer having 5.0% free isocyanate groups (relative to the solids content) was obtained. Next, 26.5 parts of dimethylol propionate and 120 parts of methyl ethyl ketone were added to the system. Then 0.07 part of dibutyltin dilaurate was added, and then 9.9 parts of triethylamine. The system was gradually heated and allowed to react at 75°C for 120 minutes. Then the system was cooled to 50°C. As a result, urethane prepolymer having 1.99% free isocyanate groups (relative to the solids content) and carboxyl groups was obtained.

Next, 9.9 parts of triethylamine were added to the system at 50°C to neutralize the remaining carboxyl groups. Then, 900 parts of distilled water were gradually added and the system was stirred at 3,000 r.p.m. with a homomixer to emulsify the system at 25°C for 20 minutes.

Next, a water solution of diethylenetriamine was added at 25°C. That solution was prepared by dissolving 13.3 parts of diethylene triamine in 80 parts of distilled water. The system was stirred at 25°C for 60 minutes. Next, methyl ethyl ketone solvent was recovered at reduced pressure (water bath temperature: 40°C) by means of an evaporator. An emulsion composition of polyurethane having active amino groups according to the invention was obtained.

The emulsion composition thus obtained was analyzed; the results are shown in Table 3. The content of amino groups was determined by a method similar to that of Example 1.

Table 3

| Example 3 | |
| --- | --- |
| Solids content | 32 % by weight |
| Am.V equivalent to active amino groups | 3.30 |
| Am.V equivalent to neutralizing triethylamine | 5.7 |
| Appearance | Semitransparent liquid |

Comparative Examples 1 to 3

Urethane prepolymers were prepared and emulsified by procedures identical to those of Examples 1 to 3. Then, in place of diethylenetriamine, the same numbers of moles of ethylenediamine were added to the systems, respectively. The systems were stirred and mixed in the same manner as Examples 1 to 3, and the solvent was recovered to obtain polyurethane emulsions of the prior art (Comparative Examples 1 to 3). These polyurethane emulsions were analyzed. The results are shown in Table 4. The amino group content was measured in the same way as Example 1.

Comparative Example 4

A urethane prepolymer was prepared and emulsified in the same manner as Example 1. After that, a water solution of diethylenetriamine was added so that the mole ratio of the terminal NCO groups of the urethane prepolymer to the amino groups (both primary and secondary) of diethylenetriamine was 1.0/0.9, and the system was stirred in the same way as Example 1. Then the solvent was recovered to obtain a polyurethane emulsion of the prior art (Comparative Example 4). This polyurethane emulsion was analyzed. The results are shown in Table 4. The amino group content was measured in the same manner as Example 1.

**Table 4**

**Comparative Examples 1 to 4**

| | Comparative Example 1 | Comparative Example 2 | Comparative Example 3* | Comparative Example 4 |
|---|---|---|---|---|
| Solids Content | 40.3 wt.% | 37.8 wt.% | 32 wt.% | 40 wt.% |
| Am.V | 0.1 | 0.12 | 5.80 | 0.09 |

*In Comparative Example 3, the Am.V corresponding to neutralizing triethylamine was 5.70.

In Examples 1 to 3, the polyamines added to the urethane polymer after emulsification and dispersion have at least two primary amino groups and at least one secondary amino group. The polyamine is added so that the mole ratio of the terminal NCO groups of the urethane prepolymer to the primary amino groups of the polyamine is within a range from 1.0/1.0 to 1.0/0.7.

With this arrangement, the reaction between the primary amino group and the isocyanate group takes precedence over other reactions because of the difference between the reaction velocity of the primary amino group and the isocyanate group and that of the secondary amino group and the isocyanate group. As a result, the secondary amino

8

group of the polyamine will be left intact and be introduced into the polyurethane skeleton. Thus the polyurethane emulsion composition obtained will have active amino groups.

On the other hand, Comparative Examples 1 to 4 produce conventional polyurethane emulsions having no active amino groups. The reason is that the terminal NCO groups of the urethane prepolymer and all the amino groups (primary and secondary) of the polyamine are involved in the reaction to produce higher molecular weights.

Experiments 1 to 3

The polyurethane emulsion compositions of Examples 1 to 3 were mixed with a water-soluble epoxy crosslinking agent (triglycidyl ether of glycerin) so that the mole ratio of active amino groups to epoxy groups was 1/1. The mixtures were coated on Teflon® plates. They were air-dried and heat-treated at 100°C for 20 minutes. The physical properties of the films obtained (film thickness: 200 µm) were measured. The results for the films after air drying are shown in Table 5 and those after heat treatment are shown in Table 6.

In the column headed "addition of water-soluble epoxy crosslinking agent" in Tables 5 and 6, "added" indicates the addition of a water-soluble epoxy crosslinking agent and "-" indicates no addition of the water-soluble epoxy crosslinking agent.

Of the physical properties shown in Tables 5 and 6, strength, elongation and 100 % modulus (100 % MO) were measured in accordance with JIS-K-6301 with a tensile tester (Shimazu Seisakusho trade name "autograph") , at a stretching rate of 100 mm/min. Solvent resistance was measured by immersing a film specimen measuring 2 cm X 4 cm in a solvent mixture of ethyl acetate/toluene = 1/1 (volume ratio). After immersion at 20°C for 24 hours, the swelling rate (in percentage) of the film surface area was measured. The swelling rate was determined by the following formula:

$$\text{Film swelling rate (\%)} = \frac{\text{area after swelling - initial area}}{\text{initial area}} \times 100$$

Hot water resistance was measured as the swelling rate (%) of a film specimen. A film specimen measuring 2 cm X 4 cm was immersed in hot water of 70°C for 24 hours. Then the swelling rate of the film surface area was determined by the above formula.

Experiments 4 to 6

Films (thickness: 200 µm) were prepared in the same manner as Experiments 1 to 3 except no water-soluble epoxy crosslinking agents were added. Then the physical properties of the films were measured. The results are shown in Table 5 and Table 6.

Experiments 7 to 10

The polyurethane emulsions of the prior art prepared in Comparative Examples 1 to 4 were mixed with a water-soluble epoxy crosslinking agent (triglycidyl ether of glycerin) so that the addition by weight (relative to the solids content of the polyurethane emulsion) was identical to that of Experiments 1 to 3. Films (film thickness: 200 µm) were prepared in the same manner as Experiments 1 to 3 and their physical properties were measured. The results for the films after air drying are shown in Table 5 and those after heat treatment are shown in Table 6.

Experiments 11 to 14

Films (thickness: 200 µm) were prepared in the same manner as Experiments 7 to 10 except no water-soluble epoxy crosslinking agents were added. Then the physical properties of the films were measured. The results are shown in Table 5 and Table 6.

## Table 5

[After drying at room temp.]

| | Film | | Physical Properties | | | | |
| --- | --- | --- | --- | --- | --- | --- | --- |
| | Polyurethane emulsion | Addition of water-soluble epoxy cross-linking agent | Strength (kg/cm²) | Elongation (%) | 100% MO (kg/cm²) | Solvent resistance (%) | Hot water resistance (%) |
| Experiment 1 | Example 1 | added | 181 | 305 | 130 | 83 | 6 |
| Experiment 2 | Example 2 | added | 150 | 300 | 95 | 90 | 10 |
| Experiment 3 | Example 3 | added | 230 | 190 | 145 | 63 | 5 |
| Experiment 4 | Example 1 | - | 101 | 510 | 65 | 155 | 20 |
| Experiment 5 | Example 2 | - | 66 | 450 | 35 | 190 | 26 |
| Experiment 6 | Example 3 | - | 140 | 380 | 90 | 135 | 20 |
| Experiment 7 | Comparative Example 1 | added | 160 | 470 | 80 | 160 | 19 |
| Experiment 8 | Comparative Example 2 | added | 120 | 380 | 60 | 115 | 23 |
| Experiment 9 | Comparative Example 3 | added | 180 | 380 | 101 | 130 | 19 |
| Experiment 10 | Comparative Example 4 | added | 135 | 370 | 100 | 130 | 20 |
| Experiment 11 | Comparative Example 1 | - | 150 | 500 | 70 | 160 | 18 |
| Experiment 12 | Compatative Example 2 | - | 100 | 400 | 50 | 120 | 25 |
| Experiment 13 | Comparative Example 3 | - | 160 | 400 | 95 | 130 | 20 |
| Experiment 14 | Comparative Example 4 | - | 120 | 400 | 90 | 130 | 21 |

EP 0 601 764 B1

## Table 6

[Air drying at room temp., then heat treatment at 100°C for 20 minutes]

| | Film | | Physical Properties | | | | |
| --- | --- | --- | --- | --- | --- | --- | --- |
| | Polyurethane emulsion | Addition of water-soluble epoxy cross-linking agent | Strength $(kg/cm^2)$ | Elongation (%) | 100% MO $(kg/cm^2)$ | Solvent resistance (%) | Hot water resistance (%) |
| Experiment 1 | Example 1 | added | 200 | 300 | 120 | 60 | 5 |
| Experiment 2 | Example 2 | added | 180 | 280 | 100 | 80 | 9 |
| Experiment 3 | Example 3 | added | 250 | 200 | 150 | 50 | 3 |
| Experiment 4 | Example 1 | - | 100 | 500 | 60 | 150 | 15 |
| Experiment 5 | Example 2 | - | 70 | 500 | 40 | 180 | 20 |
| Experiment 6 | Example 3 | - | 150 | 400 | 90 | 130 | 13 |
| Experiment 7 | Comparative Example 1 | added | 165 | 450 | 80 | 120 | 15 |
| Experiment 8 | Comparative Example 2 | added | 120 | 390 | 60 | 110 | 17 |
| Experiment 9 | Comparative Example 3 | added | 185 | 350 | 110 | 100 | 13 |
| Experiment 10 | Comparative Example 4 | added | 135 | 320 | 97 | 100 | 19 |
| Experiment 11 | Comparative Example 1 | - | 151 | 495 | 75 | 163 | 18 |
| Experiment 12 | Compatative Example 2 | - | 100 | 420 | 53 | 130 | 23 |
| Experiment 13 | Comparative Example 3 | - | 160 | 403 | 90 | 125 | 20 |
| Experiment 14 | Comparative Example 4 | - | 115 | 390 | 95 | 135 | 20 |

EP 0 601 764 B1

The results shown in Table 5 and Table 6 demonstrate that the emulsion compositions of polyurethanes having active amino groups of Examples 1 to 3 clearly showed improvements, when an epoxy crosslinking agent was used, in strength and other physical properties, hot water resistance and solvent resistance after mere air drying. This is attributed to the active amino groups of the polyurethane crosslinking with the epoxy group of the crosslinking agent at room temperature or at higher temperatures. In contrast, the prior art polyurethane emulsions of Comparative Examples 1 to 4 hardly showed improvements or changes in their physical properties after air drying even when an epoxy crosslinking agent was used. They showed some improvements in physical properties after heat treatment at 100°C. This is attributed to the physical properties being entirely dependent on self-polymerization of the epoxy crosslinking agent.

The modification achieved by both the emulsion compositions of polyurethanes having active amino groups of Examples 1 to 3 and the epoxy crosslinking agents resulted from the crosslinking between them and thus from their integration. On the other hand, the modification achieved by both the prior art polyurethane emulsions and the epoxy crosslinking agents was through the entanglement of self-polymerizing chains of the epoxy crosslinking agent and was fundamentally different.

## Claims

1. A process for preparing a polyurethane emulsion comprising

   emulsifying and dispersing in water a urethane prepolymer having 0.3 to 3% by weight terminal isocyanate groups, the prepolymer having been obtained by reacting a compound having two or more active hydrogen atoms and an organic polyisocyanate selected from alicyclic polyisocyanates, polyisocyanates having tertiary isocyanate groups and mixtures thereof, and
   reacting the urethane prepolymer at a temperature of 5 to 40°C with a polyamine having at least two primary amino groups and at least one secondary amino group such that the molar ratio of terminal isocyanate groups in the urethane prepolymer to primary amino groups in the polyamine is from 1/1 to 1/0.7.

2. A process according to claim 1, wherein the compound having two or more active hydrogen atoms has a molecular weight from 500 to 5,000.

## Patentansprüche

1. Verfahren zur Herstellung einer Polyurethanemulsion, umfassend

   Emulgieren und Dispergieren in Wasser eines Urethanprepolymeren mit 0,3 bis 3 Gew.-% endständiger Isocyanatgruppen, wobei das Prepolymer durch Umsetzen einer Verbindung mit zwei oder mehreren aktiven Wasserstoffatomen und eines organischen Polyisocyanats, gewählt aus alicyclischen Polyisocyanaten, Polyisocyanaten mit tertiären Isocyanatgruppen und Mischungen hiervon, erhalten worden ist, und
   Umsetzen des Urethanprepolymeren bei einer Temperatur von 5 bis 40°C mit einem Polyamin mit mindestens zwei primären Aminogruppen und mindestens einer sekundären Aminogruppe, so daß das Molverhältnis von endständigen Isocyanatgruppen in dem Urethanprepolymer zu primären Aminogruppen in dem Polyamin 1/1 bis 1/0,7 beträgt.

2. Verfahren nach Anspruch 1, wobei die Verbindung mit zwei oder mehreren aktiven Wasserstoffatomen ein Molekulargewicht von 500 bis 5.000 aufweist.

## Revendications

1. Procédé de préparation d'une émulsion de polyuréthane comprenant les étapes consistant

   - à émulsifier et à disperser dans de l'eau un prépolymère d'uréthane contenant de 0,3 à 3 % en poids de groupes terminaux isocyanate, le prépolymère ayant été obtenu par réaction d'un composé comportant deux ou plus de deux atomes d'hydrogène actif avec un polyisocyanate organique choisi parmi les polyisocyanates alicycliques, les polyisocyanates comportant des groupes isocyanate tertiaires et des mélanges de ceux-ci, et
   - à faire réagir le prépolymère d'uréthane à une température allant de 5 à 40 °C avec une polyamine comportant au moins deux fonctions amine primaire et au moins une fonction amine secondaire, de telle sorte que le rapport molaire des groupes terminaux isocyanate dans le prépolymère d'uréthane aux fonctions amine primaire dans la polyamine est compris dans un intervalle allant de 1/1 à 1/0,7.

2. Procédé conforme à la revendication 1, dans lequel le composé comportant deux ou plus de deux atomes d'hydrogène actif a une masse moléculaire comprise dans un intervalle allant de 500 à 5 000.